# EUROPÄISCHE PATENTSCHRIFT

(11) **EP 2 367 177 B1**
(45) Veröffentlichungstag und Bekanntmachung des Hinweises auf die Patenterteilung: **19.09.2012**
(21) Anmeldenummer: 10305266.8
(22) Anmeldetag: 18.03.2010
(51) Int. Cl.: H01B 7/02, B29C 47/06, B29C 47/28, H01B 13/14

(54) **Elektrisches Kabel und Extruderdüse zu dessen Herstellung**
Electrical cable and extruder nozzle for its production
Câble électrique et buse d'extrusion destinée à sa fabrication

(43) Veröffentlichungstag der Anmeldung: 21.09.2011
(73) Patentinhaber: Nexans, 75008 Paris (FR)
(72) Erfinder: Gonzalez, Encarna Calvo, 91126 Schwachbach (DE); Lankes, Christian, 90537, Feucht (DE); Gonnet, Jean-Marc, 90429, Nürnberg (DE)
(74) Vertreter: Taruttis, Stefan Georg

(56) Entgegenhaltungen:
- WO-A1-2006/056218
- FR-A1- 2 654 867
- GB-A- 1 462 431
- US-A- 2 452 610
- US-A- 4 093 414
- US-A- 5 515 848
- US-A1- 2007 089 898
- US-B1- 7 057 113

## Beschreibung

Die Erfindung betrifft ein Verfahren zur Herstellung eines elektrischen Kabels mit zumindest 2 elektrischen Leitern und die Verwendung einer Düse für einen Extruder, die für die Herstellung elektrischer Kabel geeignet ist. Das Kabel weist zumindest zwei konzentrisch um die parallelen angrenzenden Leiter angeordnete Isoliermassen auf, sowie ein Verfahren zur Herstellung des elektrischen Kabels durch Ummantelung zumindest zweier Leiter mit zumindest zwei konzentrisch um die Längsachse des Kabels geschichteten Isoliermassen.

### Stand der Technik

Generell sind gattungsgemäße elektrische Kabel mit 2 oder 3 Leitern bekannt, bei denen die Leiter jeweils umfänglich isoliert sind und dicht nebeneinander parallel zueinander in einer ersten Masse eingebettet sind, die an den gemeinsamen Außenumfang der parallel aneinander angrenzenden Leiter anschließt. Der Außenumfang der ersten Masse weist bei 2 oder 3 jeweils isolierten Leitern einen kreisförmigen Querschnitt auf. Die erste Masse kann von einer zweiten Masse mit ringförmigem Querschnitt umgeben sein.

Aus "Kabel und isolierte Leitungen", VDI-Gesellschaft Kunststofftechnik, VDI-Verlag (1984) ist eine gattungsgemäße Extruderdüse bekannt, mit der eine Isoliermasse im Druckverfahren durch einen Kanal mit ringförmigem Querschnitt konzentrisch um einen Leiter gespritzt wird. Der Leiter wird durch einen Durchlass einer Spitze aus der Spitzenöffnung geführt und anschließend mit Isoliermasse umspritzt, die aus einer ringförmigen Auslassöffnung tritt. Die Spitzenöffnung ist axial zu einem Kanal für das Isoliermaterial angeordnet, der einen ringförmigen Querschnitt aufweist. Der Leiter tritt nach Kontaktierung mit dem Isoliermaterial durch eine Düse, die auf der gemeinsamen Achse der Spitzenöffnung und des ringförmigen Kanals angeordnet ist. Die Spitzenöffnung führt den Leiter und hat daher einen Radius, der im Wesentlichen dem Radius des Leiters entspricht, während die Düse einen Radius hat, der etwa um den Betrag der Dicke der gewünschten Isolierung größer ist als der Radius der Spitzenöffnung. Weiterhin ist eine Extruderdüse bekannt, bei der der ringförmige Kanal einen Einsatz aufweist, der den Kanal in zwei beabstandete, etwa parallele koaxiale Teilkanäle unterteilt, die die Isoliermasse in zwei Teilströme aufteilt. Der Teilkanal mit kleinerem Radius weist eine ringförmige beabstandete, etwa parallele koaxiale Teilkanäle unterteilt, die die Isoliermasse in zwei Teilströme aufteilt. Der Teilkanal mit kleinerem Radius weist eine ringförmige Auslassöffnung auf, die etwa auf dem Leiter endet, während der andere Teilkanal in einer getrennten ringförmigen Auslassöffnung in einem größeren Abstand von der Spitzenöffnung angrenzend an den Leiter mündet, als der Teilkanal mit kleinerem Radius. Bei Verwendung dieser Düse wird Isoliermasse in zwei voneinander beabstandeten Teilströmen auf den Leiter geschichtet, sodass der Leiter bei Bewegung durch die Düsenöffnung nacheinander von einem ersten Massestrom und einem zweiten Massestrom beschichtet wird. Dieses Verfahren soll sich insbesondere zur Zwickelfiillung verseilter Leitungen eignen.

Die US 2007/0089898 A1 beschreibt ein vieradriges Kabel, dessen Adern von einem ersten Mantel unmittelbar eingefasst sind, der die Zwickel ausfüllt und einen zylindrischen Außenumfang herstellt.

Die US 5,515,848 beschreibt ein Elektrodenkabel, das aus verseilten Adern besteht, um welche ein Dielektrikum angeordnet sein kann.

Die US 4,093,414 beschreibt eine Extruderdüse zur Herstellung von Kabeln, bei der zwei geschmolzene Massen durch getrennte ringförmige Kanäle auf einen axial geführten Draht aufgebracht werden, wobei der Draht von zwei konzentrisch angeordneten Mänteln eingefasst wird.

Die WO 2006/056218 A1 beschreibt ein Verfahren zur Umhüllung von Leitern mit zwei oder mehr Materialschichten mit einer Extruderdüse, die um einen Zentralkanal zumindest zwei ringförmige Auslassöffnungen aufweist, durch die jeweils eine Masse auf den Leiter aufgetragen werden kann.

### Aufgabe der Erfindung

Die Aufgabe der Erfindung liegt in der Bereitstellung eines Herstellungsverfahren für ein Kabel und eine dazu verwendbare Extruderdüse, mit der zumindest 2 Leiter, die in einer Spitze geführt sind, mit zwei übereinander geschichteten Isoliermassen ummantelt werden können.

### Allgemeine Beschreibung der Erfindung

Die Erfindung löst die Aufgabe mit den Merkmalen der Ansprüche und stellt ein elektrisches Kabel bereit, bei dem zumindest 2 Leiter, vorzugsweise 3 Leiter, die optional jeweils von einer umfänglichen Isolierung umgeben sind, von einer ersten Isoliermasse umgeben sind, die an den gemeinsamen Außenumfang der Leiter angrenzt und radial zu jedem Leiter eine im Wesentlichen konstante Schichtdicke aufweist, sowie eine zweite Isoliermasse, die an die erste Isoliermasse angrenzt und deren äußerer Umfang einen im Wesentlichen durch eine Extruderdüse vorgegebenen, insbesondere kreisförmigen Querschnitt hat. Die Kabel zeichnen sich dadurch daher aus, dass zwei, drei oder mehr Leiter, die jeweils umfänglich isoliert sein können, von einer ersten Isoliermasse umschlossen sind, die eine im Wesentlichen einheitliche Schichtdicke aufweist und die Leiter auf deren gemeinsamen Außenumfang, bzw. auf dem gemeinsamen Außenumfang der aneinander angrenzenden umfänglichen Isolierungen der Leiter umfasst. Die einheitliche Schichtdicke der ersten Isoliermasse kann z.B. radial zu den Längsmittelachsen der Leiter und/oder radial zur gemeinsamen Längsmittelachse der Leiter bestimmt werden. Die erste Isoliermasse ist von der zweiten Isoliermasse formschlüssig umfasst, wobei die zweite Isoliermasse die Außenfläche des Kabels bilden kann, deren Form der Düse entspricht und vorzugsweise einen kreisförmigen Außenquerschnitt hat.

Die optionale umfängliche Isolierung jedes Leiters hat vorzugsweise einen zylindrischen Außenumfang, besonders bevorzugt einen im Wesentlichen ringförmigen Querschnitt. Ein Leiter kann einstückig sein oder mehrere Litzen aufweisen und hat vorzugsweise einen im Wesentlichen kreisförmigen Querschnitt.

Weiterhin stellt die Erfindung ein mit der Extruderdüse durchführbares Verfahren zur Herstellung erfindungsgemäßer Kabel bereit, bei denen zumindest zwei, drei oder mehr parallele Leiter gemeinsam mit zumindest zwei konzentrisch angeordneten Isoliermassen umgeben sind und eine erste Isoliermasse eine entlang der Längsachse des Kabels im Wesentlichen einheitliche Schichtdicke aufweist, die von einer angrenzenden zweiten Isoliermasse umgeben ist, die vorzugsweise eine zylindrische Außenfläche hat.

Die erste Isoliermasse weist radial zur Längsachse des Kabels eine im Wesentlichen einheitliche Schichtdicke auf. Die erste Isoliermasse weist erfindungsgemäß bevorzugt in dem Bereich der Leiter oder deren umfänglicher Isolierung, welcher Teil des gemeinsamen Außenumfangs der aneinander angrenzenden Leiter ist und z.B. nicht einem anderen Leiter bzw. dessen Isolierung zugewandt ist oder an einen anderen Leiter bzw. dessen Isolierung angrenzt, eine radial zur Längsachse jedes Leiters einheitliche Schichtdicke auf. Vorzugsweise weisen die Leiter jeweils eine umfängliche Isolierung auf, so dass sie gegeneinander isoliert sind. Die parallelen Leiter können miteinander verseilt, verflochten oder um eine gemeinsame Längsachse gedreht sein.

Die zur Herstellung der Kabel vorzugsweise verwendete Extruderdüse weist eine Spitze mit einer Spitzenöffnung auf, eine auf der Längsachse der Spitze angeordnete Düse und in dem Bereich, um den die Spitzenöffnung und die Düse beabstandet sind, eine ringförmige Auslassöffnung für Isoliermasse, die mit einem Kanal für Isoliermasse verbunden ist. Vorzugsweise weist der Kanal für Isoliermasse einen ringförmigen Querschnitt auf, der Auslassöffnung verläuft. Erfindungsgemäß ist der Kanal zur Zuführung von Isoliermaterial, auch als Angusskanal bezeichnet, in einem ersten Abschnitt in zwei oder mehr Teilkanäle unterteilt, die in einem Abstand zur ringförmigen Auslassöffnung in einen zweiten Abschnitt des Kanals münden. Der zweite Abschnitt des Kanals, der vorzugsweise einen ringförmigen Querschnitt aufweist, erstreckt sich über den Abstand, um den der erste Abschnitt des Kanals von der ringförmigen Auslassöffnung beabstandet ist.

Der erste Abschnitt des Kanals kann dadurch in zumindest zwei Teilkanäle unterteilt werden, die dann in einen gemeinsamen zweiten Abschnitt des Kanals münden, dass der Kanal in seinem ersten Abschnitt durch einen Einsatz in zumindest zwei Teilkanäle unterteilt wird. Der Einsatz erstreckt sich ausschließlich über den ersten Abschnitt des Kanals und endet in dem Abstand vor der gemeinsamen ringförmigen Auslassöffnung, über den sich der zweite Abschnitt des Kanals erstreckt. Daher erstrecken sich zwei oder mehr Teilkanäle, die zur Zuführung von zwei oder mehr Isoliermassen dienen, ausschließlich über den ersten Abschnitt des Kanals.

Der Einsatz kann sich z.B. ausschließlich über den ersten Abschnitt des Kanals bis angrenzend an den zweiten Abschnitt erstrecken und eine innere und eine äußere Mantelfläche aufweisen, die im Wesentlichen jeweils Kegelstumpfflächen sind und dort gegeneinander stoßen, an dem der erste Abschnitt mit dem zweiten Abschnitt des Kanals verbunden ist. Vorzugsweise ist ein solches Einsatzstück konzentrisch zur Düse angeordnet.

Der zweite Abschnitt des Kanals, in den die zumindest zwei Teilkanäle münden, erstreckt sich von seiner Auslassöffnung z.B. bis in einen Abstand von 10 bis 100%, bevorzugter zu 50 bis 100 % des Außenradius der Düse um die Längsmittelachse.

Die im erfindungsgemäßen Herstellungsverfahren verwendete Extruderdüse erlaubt die Herstellung von Kabeln, in denen Leiter mit zumindest zwei konzentrisch angeordneten Isoliermassen beschichtet sind, von denen die erste oder innere Isoliermasse eine einheitliche Schichtdicke um den gemeinsamen Außenumfang der aneinander angrenzenden Leiter bzw. der aneinander angrenzenden umfänglichen Isolierungen der Leiter aufweist. Auf Grund der radial zur Längsachse des Kabels im Wesentlichen einheitlichen Schichtdicke der ersten Isoliermasse weist deren äußere Fläche Zwickel auf, die im Abstand der Schichtdicke den Zwickeln entsprechen, die in der von den parallel zueinander und aneinander angrenzenden umfänglichen Isolierungen der Leiter gebildeten gemeinsamen Umfangsfläche gebildet sind. Die zweite Isoliermasse, die die erste Isoliermasse umgibt, ergänzt den Außenumfang der ersten Isoliermasse und füllt deren Zwickel zu dem Querschnitt auf, der durch die Düse des Extruders vorgegeben ist, insbesondere zu einem zylindrischen Außenumfang.

Erfindungsgemäß hergestellte Kabel weisen insgesamt geringere Schichtdicken aus erster und zweiter Isoliermasse auf als z.B. Kabel, die mit einer Extruderdüse hergestellt sind, in denen zwei konzentrische Teilkanäle zwei Isoliermassen durch zwei voneinander beabstandete ringförmige Auslassöffnungen transportieren.

Während Extruderdüsen, bei denen zwei Isoliermassen in zwei voneinander getrennten Teilkanälen durch voneinander beabstandete ringförmige Auslassöffnungen, d.h. voneinander beabstandet um einen Leiter geschichtet werden, und bei Transport eines Leiters entlang der ringförmigen Auslassöffnungen zwei Isoliermassen zeitlich nacheinander um einen Leiter geschichtet werden, eine geringe minimale Schichtdicke des äußeren Isoliermaterials, z.B. im Bereich von zumindest 0,8mm bis zumindest 2mm, z.B. von 1,43mm erlauben, können mit der Extruderdüse Leiter mit einer zweischichtigen Hülle ummantelt werden, bei der die Schichtdicke des inneren Isoliermaterials geringer ist, und vorzugsweise die Schichtdicke der beiden Isoliermassen insgesamt geringer ist. Auf diese Weise ermöglicht die Erfindung die Herstellung von Kabeln, bei denen die Leiter oder deren umfängliche individuelle Isolierungen aneinander angrenzen und gemeinsam mit zumindest zwei übereinander, insbesondere koaxial angeordneten Isoliermassen ummantelt sind, von denen zumindest die innere Isoliermasse eine geringe Schichtdicke aufweist, und vorzugsweise die Gesamtdicke der zumindest zwei Isoliermassen insgesamt gering ist, jedenfalls geringer als dies bei der Herstellung mit einer Extruderdüse möglich ist, bei der zwei Massen durch beabstandete ringförmige Auslassöffnungen nacheinander und/oder voneinander getrennt auf den Leiter geschichtet werden. Daher erlaubt die erfindungsgemäße Extruderdüse die Herstellung von elektrischen Kabeln, bei denen im Vergleich zu herkömmlich hergestellten Kabeln geringere Schichtdicken von Isoliermaterial bzw. geringere Volumina an Isoliermassen enthalten sind.

Die Erfindung findet insbesondere Verwendung in Verfahren zur Herstellung von Kabeln mit verseilten Leitern und/oder mehradrigen Kabeln, insbesondere Kabeln, bei denen zwei oder mehr Leiter, die mit einer umfänglichen Isolierschicht versehen sind, mit zumindest zwei koaxial angeordneten Isoliermassen versehen werden. Die Isoliermassen sind während des Herstellungsverfahrens fließfähig, insbesondere jeweils unabhängig voneinander ein thermoplastischer oder duroplastischer Kunststoff.

### Genaue Beschreibung der Erfindung

Die Erfindung wird nun in größeren Einzelheiten mit Bezug auf die Figuren beschrieben, in denen
- Figur 1 eine Extruderdüse im Längsschnitt zum Vergleich zeigt, bei der zwei vollständig getrennte Kanäle für Isoliermassen in beabstandeten Auslassöffnungen unmittelbar angrenzend an einen zu beschichtenden Leiter grenzen,
- Figur 2 eine Extruderdüse im Längsschnitt zeigt,
- Figur 3 schematisch den Querschnitt eines Kabels zeigt, das mit einer Extruderdüse nach Figur 1 hergestellt wurde, und
- Figur 4 schematisch den Querschnitt eines Kabels zeigt, das mit einer Extruderdüse nach Figur 2 hergestellt ist.

In den Figuren bezeichnen gleiche Bezugsziffern funktionsgleiche Elemente. Generell bezeichnet die Längsmittelachse die gemeinsame Längsachse, auf der die Spitze 1 bzw. deren Spitzenöffnung 2 und die Düse 10 angeordnet sind. Im Herstellungsverfahren werden Leiter entlang dieser Längsachse bewegt.

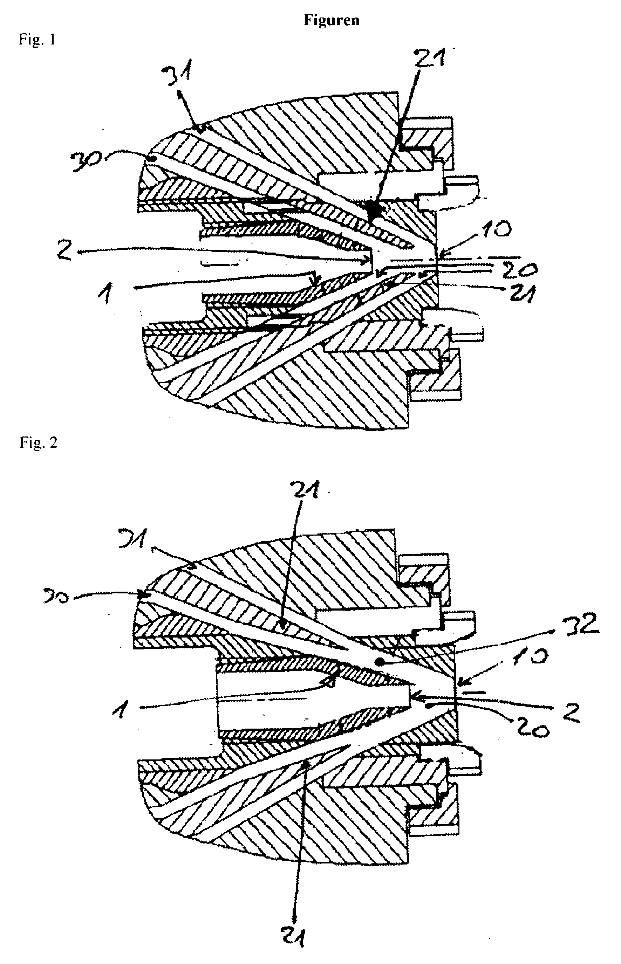

Fig. 1 zeigt eine Spitze 1 zur Führung eines oder mehrerer Leiter. Die Spitze 1 weist eine in der Achse der Spitze 1 angeordnete Spitzenöffnung 2 auf, durch welche zumindest ein Leiter, vorzugsweise zwei oder mehr Leiter, die wahlweise eine umfängliche Isolierung aufweisen, in Richtung der Düse 10 bewegt werden können. Die Düse 10 bildet eine Kalibrieröffnung, die sich vorzugsweise rotationssymmetrisch um die Achse der Spitze 1 erstreckt. Die Düse 10 ist in einem Abstand von der Spitzenöffnung 2 angeordnet, in welchem zwei voneinander axial beabstandete Auslassöffnungen 20 angeordnet sind. Die Auslassöffnungen sind, um den Bereich beabstandet, über den sich der Einsatz 21 erstreckt, insbesondere in einem Radius zur Längsmittelachse von Spitze 1 und Düse 10 zwischen dem Radius der Spitzenöffnung 2 und dem Radius der Düse 10.

Bereich beabstandet, über den sich der Einsatz 21 erstreckt, insbesondere in einem Radius zur Längsmittelachse von Spitze 1 und Düse 10 zwischen dem Radius der Spitzenöffnung 2 und dem Radius der Düse 10.

Der Einsatz 21 beabstandet den ersten ringförmigen Kanal 30 vom zweiten ringförmigen Kanal 31, die jeweils in einer der beabstandeten Auslassöffnungen 20 münden.

Bei dieser nicht erfindungsgemäßen Extruderdüse werden bei der Herstellung eines Kabels ein oder mehrere Leiter entlang der Längsachse der Spitze 1 durch die Spitzenöffnung 2 in Richtung auf die Düse 10 und durch die Düse 10 bewegt. Eine erste Isoliermasse wird durch den ersten Kanal 30 unmittelbar auf den Leiter aufgetragen, da der erste Kanal 30 in einer ringförmigen Auslassöffnung 20 mündet, die um die gemeinsame Längsmittelachse etwa im Radius der Spitzenöffnung 2 angeordnet ist, unmittelbar auf den Leiter aufgebracht. Dabei wird die Auslassöffnung 20 des ersten Kanals 30 von der Spitze 1 und dem Einsatz 21 begrenzt.

Der Einsatz 21 beabstandet die Auslassöffnung 20 des ersten Kanals 30 von der Auslassöffnung 20 des zweiten Kanals 31 um einen Abschnitt längs der gemeinsamen Achse von Spitzenöffnung 2 und Düse 10.

Fig. 2 zeigt eine Ausführungsform einer Extruderdüse mit einer Spitze 1 zur Führung eines oder mehrerer Leiter, die im Wesentlichen parallel zueinander und optional miteinander verseilt sein können, optional mit umfänglicher Isolierung um jeden Leiter. Die Spitze 1 ist innen hohl und weist einen zylindrischen Abschnitt und einen angrenzenden Abschnitt auf, der sich kegelstumpfförmig zur Spitzenöffnung 2 verjüngt. Der Querschnitt der Spitzenöffnung 2 liegt senkrecht zur Längsmittelachse der Spitze 1.

Die Spitzenöffnung 1 ist in einem Abstand von der Düse 10 angeordnet, der vollständig von der einen ringförmigen Auslassöffnung 20 eingenommen wird, in welcher der zweite Abschnitt des Kanals 32 mündet. Die ringförmige Auslassöffnung 20 des zweiten Abschnitts 32 des Kanals erstreckt sich daher über den Bereich, um den die Spitzenöffnung 2 von der Düse 10 bzw. von der Eingangsöffnung der Düse 10 beabstandet ist. Die ringförmige Auslassöffnung 20 ist vorzugsweise über den Abschnitt der Längsmittelachse aufgespannt, um den die Spitzenöffnung 2 und die Düse 10 beabstandet sind. Weiter bevorzugt ist die

Generell bevorzugt wird die ringförmige Auslassöffnung 20 des zweiten Abschnitts 32 von der Spitze 1 und der Düse 10 gebildet. Der zweite Abschnitt des Kanals 32 erstreckt sich bevorzugt zumindest bis in einen radialen Abstand von der gemeinsamen Längsmittelachse wie der Außenradius der Spitze 1. Vorzugsweise sind der erste und zweite Abschnitt der Kanäle im Wesentlichen konzentrisch zur gemeinsamen Längsmittelachse von Spitze 1 und Düse 10.

Der zweite Abschnitt des Kanals 32 erstreckt sich über den Bereich, um den der erste und zweite Teilkanal 30, 31 von der ringförmigen Auslassöffnung 20 beabstandet sind. In der hier gezeigten Ausführungsform trennt ein Einsatz 21, der sich über den ersten Abschnitt bis an den zweiten Abschnitt des Kanals 32 erstreckt, den ersten Kanal 30 vom zweiten Kanal 31. Der erste Kanal 30 und der zweite Kanal 31 erstrecken sind über den ersten Abschnitt bis an den zweiten Abschnitt des Kanals 32 und münden in den zweiten Abschnitt 32, der in der einer ringförmigen Auslassöffnung 20 endet, durch welche die Isoliermassen parallel zueinander in Richtung auf die Leiter austreten.

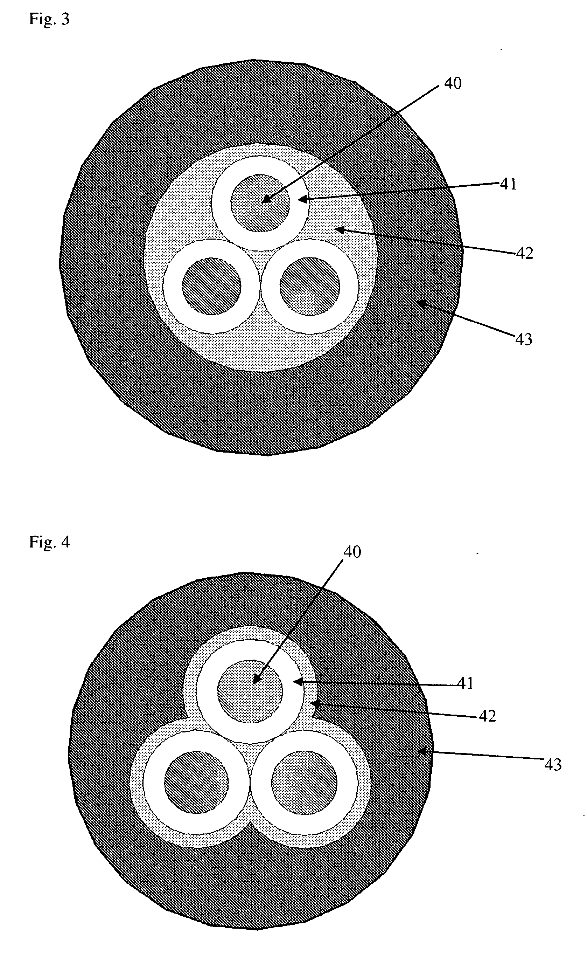

Ein Herstellungsverfahren unter Verwendung einer Extruderdüse nach Fig. 1 führt zur Herstellung eines Kabels, das schematisch im Schnitt in Figur 3 gezeigt ist. Das Kabel weist drei Leiter 40 auf, die jeweils eine umfängliche Isolierung 41 haben. Die drei Leiter 40 mit umfänglicher Isolierung 41 sind aneinander angrenzend angeordnet und wurden beim Herstellungsverfahren längs der Achse der Spitze 1 durch die Spitzenöffnung 2 und anschließend durch die Düse 10 bewegt. Dabei wurde eine erste Isoliermasse 42 durch den ersten Kanal 30 gefördert und eine zweite Isoliermasse 43 durch den zweiten Kanal 31.

Wie aus Fig. 3 ersichtlich, führt die Extruderdüse nach Fig. 1 dazu, dass die erste Isoliermasse 42 die Leiter 40 bzw. deren umfängliche Isolierung 41 so umgibt, dass die Zwickel zwischen den Isolierungen 41 ausgefüllt werden und eine zylindrische Außenfläche erzeugt wird, an die die zweite Isoliermasse 43 angrenzt. Die zweite Isoliermasse 43 bildet daher einen konzentrischen ringförmigen Querschnitt um die erste Isoliermasse 42.

Beim erfindungsgemäßen Herstellungsverfahren mit einer Düse nach Fig. 2 wurden ebenfalls drei Leiter 40 mit umfänglicher Isolierung 41 parallel zueinander angeordnet und längs der Achse der Spitze 1 durch die Spitzenöffnung 2 und anschließend durch die Düse 10 bewegt. Eine erste Isoliermasse 42 wurde in den ersten Kanal 30 gefördert, der sich über den ersten Beim erfindungsgemäßen Herstellungsverfahren mit einer Düse nach Fig. 2 wurden ebenfalls drei Leiter 40 mit umfänglicher Isolierung 41 parallel zueinander angeordnet und längs der Achse der Spitze 1 durch die Spitzenöffnung 2 und anschließend durch die Düse 10 bewegt. Eine erste Isoliermasse 42 wurde in den ersten Kanal 30 gefördert, der sich über den ersten Abschnitt erstreckt, und eine zweite Isoliermasse 43 wurde durch den zweiten Kanal 31 gefördert, der sich ebenfalls über den ersten Abschnitt erstreckt. Da der erste Abschnitt, in dem der erste Kanal 30 vom zweiten Kanal 31 getrennt ist, unmittelbar an den zweiten Abschnitt des Kanals 32 angrenzt, wurden die erste Isoliermasse 42 und die zweite Isoliermasse 43 in dem gemeinsamen zweiten Abschnitt des Kanals 32 transportiert und durch die eine gemeinsame ringförmige Auslassöffnung 20 parallel zueinander auf die Leiter 40 bzw. deren umfängliche Isolierung 41 aufgebracht.

Wie in Fig. 4 gezeigt ist, ermöglicht die Extruderdüse ein Herstellungsverfahren, bei dem im Vergleich zur Extruderdüse nach Fig. 1 eine dünnere Schicht aus dem ersten Isoliermaterial 42 um die Leiter 40 mit ihrer umfänglichen Isolierung 41 gebildet wird, wobei die zweite Isoliermasse 43 unmittelbar an die erste Isoliermasse 42 angrenzt. Die erste Isoliermasse 42 hat eine im Wesentlichen einheitliche Schichtdicke um die Leiter 40, bzw. um deren umfängliche Isolierung 41, insbesondere um die anteilige zylindrische Außenfläche des Oberflächenbereichs jedes Leiters bzw. dessen individueller Isolierung, die einen Teil der gemeinsamen Außenfläche der aneinander angrenzenden Leiter 40 bzw. deren individueller Isolierungen 41 bildet. Die zweite Isoliermasse 43 grenzt an die erste Isoliermasse 42. Die erste Isoliermasse 42 umgibt daher die aneinander angeordneten Leiter 40, die umfängliche bzw. individuelle Isolierungen 41 aufweisen, und weist längs des Kabels eine einheitliche Schichtdicke auf, die die Leiter 40, die optional jeweils eine Isolierung 41 aufweisen, auf deren gemeinsamer Außenfläche umgibt. Die erste Isoliermasse 42 bildet die Zwickel, die in der gemeinsamen Umfangsfläche der Leiter 40 bzw. deren umfänglicher Isolierungen 41 entstehen, im Abstand der Schichtdicke der ersten Isoliermasse 42 nach. Im Unterschied zu dem mit der Vergleichsdüse nach Fig. 1 hergestellten Kabel, das in Fig. 3 gezeigt ist, weist die erste Isoliermasse 42 bei dem erfindungsgemäß hergestellten Kabel keinen kreisförmigen Querschnitt um die Leiter 40 bzw. um deren umfängliche Isolierung 41 auf, sodass das erfindungsgemäße Verfahren eine die Leiter 40 bzw. deren umfängliche Isolierung 41 umgebende Schicht aus erstem Isoliermaterial 42 mit im Wesentlichen gleicher Schichtdicke bildet. Entsprechend ist mit dem erfindungsgemäßen Herstellungsverfahren, bzw. durch Verwendung der Extruderdüse die Kabels und zu einer besseren Feuerbeständigkeit, jedenfalls bei temperaturempfindlichem ersten Isoliermaterial 42.

Die zweite Isoliermasse 43 ergänzt den Querschnitt des erfindungsgemäßen Kabels, das Leiter 40, optional jeweils mit umfänglicher Isolierung 41, eine diese in einheitlicher Schichtdicke umgebende erste Isoliermasse 42 aufweist oder daraus besteht, zu einem Querschnitt, der durch die Düse 10 vorgegeben ist, insbesondere zu einem kreisförmigen Querschnitt. Da beim erfindungsgemäßen Herstellungsverfahren das erste Isoliermaterial 42 in einheitlicher Schichtdicke um Leiter 40 mit umfänglicher Isolierung 41 gebildet wird und in der äußeren Begrenzung Zwickel aufweist, und die zweite Isoliermasse 43 die erste Isoliermasse 42 kontaktiert und mit kreisförmigen Außenumfang begrenzt, kann der Gesamtquerschnitt des Kabels, bzw. der Radius der Düse 10, erfindungsgemäß kleiner sein als bei dem mit der Vergleichsdüse hergestellten Kabel, bei gleicher Anzahl und gleichem Querschnitt der Leiter 40, optional jeweils mit umfänglicher Isolierung 41.

Die erfindungsgemäße Extruderdüse ermöglicht daher ein Herstellungsverfahren eines Kabels, das sich durch höhere Flexibilität und bevorzugt überdies durch eine bessere Hitzebeständigkeit auszeichnet, bei geringerem Gehalt bzw. Verbrauch an erster und/oder zweiter Isoliermasse.

### Bezugszeichenliste

1 Spitze
2 Spitzenöffnung
10 Düse
20 Auslassöffnung
21 Einsatz
30 erster Kanal
31 zweiter Kanal
32 zweiter Abschnitt des Kanals
40 Leiter
41 Isolierung
42 erste Isoliermasse
43 zweite Isoliermasse

## Patentansprüche

1. Verfahren zur Herstellung eines elektrischen Kabels, das zumindest zwei Leiter (40) aufweist, die im Wesentlichen parallel zueinander und aneinander angrenzend angeordnet sind, wobei die Leiter (40) von einer ersten Isoliermasse (42) eingefasst sind, die eine Innenfläche aufweist, die formschlüssig an die von der umfänglichen Isolierung (41) der Leiter (40) gebildeten gemeinsamen Außenfläche angrenzt, und die erste Isoliermasse (42) in einem axialen Abschnitt des Kabels eine konstante Schichtdicke um die aneinander angeordneten Leiter (40) aufweist und eine um eine einheitliche Schichtdicke von ihrer Innenfläche beabstandete Fläche aufweist, an welche eine zweite Isoliermasse (43) formschlüssig anliegt, durch Extrudieren einer ersten und zweiten Isoliermasse (42, 43) und Auftragen der ersten und zweiten Isoliermasse (42, 43) konzentrisch um die Leiter (40) in einem Bereich, um den die Spitzenöffnung (2) einer Spitze (1) von einer Düse (10) entlang einer gemeinsamen Längsachse beabstandet ist,
**dadurch gekennzeichnet, dass**
die erste Isoliermasse (42) in einem ersten Abschnitt in einem ersten Kanal (30) geführt wird, und die zweite Masse (43) in einem vom ersten Kanal (30) getrennten zweiten Kanal (31) geführt wird, und angrenzend an den ersten Abschnitt die erste und zweite Isoliermasse (42, 43) in einem angrenzenden zweiten Abschnitt eines Kanals (32) gemeinsam geführt werden und aus der gemeinsamen ringförmigen Auslassöffnung (20) des zweiten Abschnitts des Kanals (32) austreten, wobei die zweite Isoliermasse (43) eine zylindrische Außenfläche aufweist.

2. Verfahren nach Anspruch 1, **dadurch gekennzeichnet, dass** die Leiter (40) jeweils eine umfängliche Isolierung aufweisen und die erste Isoliermasse (42) an die umfängliche Isolierung (41) angrenzt.

3. Verfahren nach Anspruch 1 oder 2, **dadurch gekennzeichnet, dass** das Kabel drei Leiter (40) aufweist.

4. Verfahren nach einem der voranstehenden Ansprüche, **dadurch gekennzeichnet, dass** zumindest drei Leiter (40), die jeweils eine umfängliche Isolierung (41) aufweisen, parallel zueinander durch die Spitze (1) zur Düse (10) bewegt werden.

5. Verfahren nach einem der voranstehenden Ansprüche, **dadurch gekennzeichnet, dass** die erste Isoliermasse (42) und die zweite Isoliermasse (43) im Wesentlichen mit der gleichen Geschwindigkeit aus dem ersten Abschnitt in den zweiten Abschnitt des Kanals (32) eintreten.

6. Verwendung einer Extruderdüse bei der Herstellung eines Kabels, das zumindest zwei konzentrisch um Leiter (40) angeordnete Isoliermassen (42, 43) aufweist, mit einer hohlen Spitze (1), die eine Längsachse aufweist und eine Spitzenöffnung (2), eine in einem axialen Abstand von der Spitzenöffnung (2) angeordnete Düse (10) und einem ersten Kanal (30) für eine erste Kunststoffmasse (42) und einem zweiten Kanal (31) für eine zweite Kunststoffmasse (43), die in einer ringförmigen Auslassöffnung (20) in dem Bereich mündet, um den die Spitzenöffnung (2) von der Düse (10) beabstandet ist, bei der sich der erste Kanal (30) und der zweite Kanal (31) über einen ersten Abschnitt erstrecken, und in einen zweiten gemeinsamen Abschnitt des Kanals (32) münden, um den der erste Abschnitt von der ringförmigen Auslassöffnung (20) beabstandet ist.

7. Verwendung nach Anspruch 6 **dadurch gekennzeichnet, dass** sich der zweite Abschnitt des Kanals 32 mindestens bis in den Radius des Außenumfangs der Spitze erstreckt.

8. Verwendung nach einem der Ansprüche 6 oder 7, **dadurch gekennzeichnet, dass** die ringförmige Auslassöffnung (20) von der Spitze (1) und der Düse (10) gebildet wird.

9. Verwendung nach einem der Ansprüche 6 bis 8, **dadurch gekennzeichnet, dass** die ringförmige Auslassöffnung (20) in einem Radius um die Längsachse aufgespannt ist, der mindestens um den Radius der Spitzenöffnung (2) und maximal um den Radius der Düse (10) von der Längsachse beabstandet ist.

10. Verwendung nach einem der Ansprüche 6 bis 9, **dadurch gekennzeichnet, dass** sich ein Einsatz (21) über den ersten Abschnitt erstreckt und den ersten Kanal (30) vom zweiten Kanal (31) trennt.

11. Verwendung nach einem der Ansprüche 6 bis 10, **dadurch gekennzeichnet, dass** der erste Kanal (30) und der zweite Kanal (31) koaxial zur Achse der Spitze (1) angeordnet sind.

12. Verwendung nach einem der Ansprüche 6 bis 11, **dadurch gekennzeichnet, dass** der erste Kanal (30) und der zweite Kanal (31) im ersten Abschnitt und der zweite Abschnitt des Kanals (32) jeweils ringförmige Querschnitte aufweisen.

13. Verwendung nach einem der Ansprüche 6-5 bis 12 zur Herstellung von Kabeln, die mindestens drei Leiter (40) aufweisen, die jeweils eine umfängliche Isolierung (41) haben.

## Claims

1. Method for producing an electrical cable, which has at least two conductors (40), which are arranged substantially parallel to one another and adjoining one another, wherein the conductors (40) are enclosed by a first insulating compound (42), which has an inner surface which adjoins with positive engagement the common outer surface formed by the circumferential insulation (41) of the conductors (40), and the first insulating compound (42) has in an axial portion of the cable a constant layer thickness around the conductors (40) arranged against one another and has a surface that is disposed at a distance from its inner surface by a uniform layer thickness and against which a second insulating compound (43) lies with positive engagement, by extruding a first and a second insulating compound (42, 43) and applying the first and second insulating compounds (42, 43) concentrically around the conductors (40) in a region by which the tip opening (2) of a tip (1) is disposed at a distance from a die (10) along a common longitudinal axis,
**characterized in that**
in a first portion, the first insulating compound (42) is conducted in a first channel (30), and the second compound (43) is conducted in a second channel (31), which is separate from the first channel (30), and, adjoining the first portion, the first and second insulating compounds (42, 43) are conducted together in an adjoining second portion of a channel (32) and emerge from the common annular outlet opening (20) of the second portion of the channel (32), the second insulating compound (43) having a cylindrical outer surface.

2. Method according to Claim 1, **characterized in that** the conductors (40) respectively have a circumferential insulation and the first insulating compound (42) adjoins the circumferential insulation (41).

3. Method according to Claim 1 or 2, **characterized in that** the cable has three conductors (40).

4. Method according to one of the preceding claims, **characterized in that** at least three conductors (40), which respectively have a circumferential insulation (41), are moved parallel to one another through the tip (1) to the die (10).

5. Method according to one of the preceding claims, **characterized in that** the first insulating compound (42) and the second insulting compound (43) enter the second potion of the channel. (32) from the first portion substantially at the same rate.

6. Use of an extruder die in the production of a cable, which has at least two insulating compounds (42, 43) arranged concentrically around conductors (40), with a hollow tip (1), which has a longitudinal axis and a tip opening (2), a die (10), arranged at an axial distance from the tip opening (2), and a first channel (30) for a first plastics compound (42) and a second channel (31) for a second plastics compound (43), which open out in an annular outlet opening (20) in the region by which the tip opening (2) is disposed at a distance from the die (10), in which the first channel (30) and the second channel (31) extend over a first portion, and open out into a second common portion of the channel (32), by which the first portion is disposed at a distance from the annular outlet opening (20).

7. Use according to Claim 6, **characterized in that** the second portion of the channel (32) extends at least into the radius of the outer circumference of the tip.

8. Use according to either of Claims 6 and 7, **characterized in that** the annular outlet opening (20) is formed by the tip (1) and the die (10).

9. Use according to one of Claims 6 to 8, **characterized in that** the annular outlet opening (20) is defined in a radius around the longitudinal axis that is dispose at a distance from the longitudinal axis at least equivalent to the radius of the tip opening (2) and at most equivalent to the radius of the die (10).

10. Use according to one of Claims 6 to 9, **characterized in that** an insert (21) extends over the first portion and separates the first channel (30) from the second channel (31).

11. Use according to one of Claims 6 to 10, **characterized in that** the first channel (30) and the second channel (31) are arranged coaxially in relation to the axis of the tip (1).

12. Use according to one of Claims 6 to 11, **characterized in that** the first channel (30) and the second channel (31) in the first portion and the second portion of the channel (32) respectively have annular cross sections.

13. Use according to one of Claims 6 to 12 for producing cables that have at least three conductors (40), which respectively have a circumferential insulation (41).

## Revendications

1. Procédé de fabrication d'un câble électrique, lequel comprend au moins deux conducteurs (40) qui sont disposés pour l'essentiel parallèlement l'un à l'autre et de manière adjacente l'un à l'autre, les conducteurs (40) étant entourés d'une première masse isolante (42), laquelle présente une surface intérieure qui est adjacente par complémentarité de forme à la surface extérieure commune formée par l'isolation de pourtour (41) des conducteurs (40), et la première masse isolante (42) présente dans une portion axiale du câble une épaisseur de couche constante autour des conducteurs (40) disposés l'un contre l'autre et présente une surface espacée de sa surface intérieure d'une épaisseur de couche homogène, sur laquelle repose par complémentarité de forme une deuxième masse isolante (43), par extrusion d'une première et d'une deuxième masses isolantes (42, 43) et application de la première et de la deuxième masses isolantes (42, 43) de manière concentrique autour des conducteurs (40) dans une zone autour de laquelle l'ouverture de pointe (2) d'une pointe (1) d'une buse (10) est espacée le long d'un axe longitudinal commun,
**caractérisé en ce que**
la première masse isolante (42) est guidée dans une première portion dans un premier canal (30) et la deuxième masse (43) est guidée dans un deuxième canal (31) séparé du premier canal (30), et la première et la deuxième masses isolantes (42, 43) sont guidées en commun de manière adjacente à la première portion dans une deuxième portion adjacente d'un canal (32) et sortent de l'ouverture de sortie (20) de forme annulaire commune de la deuxième portion du canal (32), la deuxième masse isolante (43) présentant une surface extérieure cylindrique.

2. Procédé selon la revendication 1, **caractérisé en ce que** les conducteurs (40) présentent respectivement une isolation de pourtour et la première masse isolante (42) est adjacente à l'isolation de pourtour (41).

3. Procédé selon la revendication 1 ou 2, **caractérisé en ce que** le câble présente trois conducteurs (40).

4. Procédé selon l'une des revendications précédentes, **caractérisé en ce qu'**au moins trois conducteurs (40), lesquels présentent respectivement une isolation de pourtour (41), sont déplacés parallèlement les uns aux autres à travers la pointe (1) vers la buse (10).

5. Procédé selon l'une des revendications précédentes, **caractérisé en ce que** la première masse isolante (42) et la deuxième masse isolante (43) pénètrent pour l'essentiel avec la même vitesse de la première portion dans la deuxième portion du canal (32).

6. Utilisation d'une buse d'extrusion lors de la fabrication d'un câble, lequel comprend au moins deux masses isolantes (42, 43) disposées de manière concentrique autour de conducteurs (40), comprenant une pointe creuse (1) qui présente un axe longitudinal et une ouverture de pointe (2), une buse (10) disposée à un écart axial de l'ouverture de pointe (2) et un premier canal (30) pour une première masse en matière plastique (42) et un deuxième canal (31) pour une deuxième masse en matière plastique (43), lesquels débouchent dans une ouverture de sortie de forme annulaire (20) dans la zone autour de laquelle l'ouverture de pointe (2) est espacée de la buse (10), avec laquelle le premier canal (30) et le deuxième canal (31) s'étendent sur une première portion et débouchent dans une deuxième portion commune du canal (32) autour de laquelle la première portion est espacée de l'ouverture de sortie de forme annulaire (20).

7. Utilisation selon la revendication 6, **caractérisée en ce que** la deuxième portion du canal (32) s'étend au moins jusqu'au rayon du pourtour extérieur de la pointe.

8. Utilisation selon l'une des revendications 6 ou 7, **caractérisée en ce que** l'ouverture de sortie de forme annulaire (20) est formée par la pointe (1) et la buse (10).

9. Utilisation selon l'une des revendications 6 à 8, **caractérisée en ce que** l'ouverture de sortie de forme annulaire (20) s'étire sur un rayon autour de l'axe longitudinal, lequel est espacé de l'axe longitudinal au minimum du rayon de l'ouverture de pointe (2) et au maximum du rayon de la buse (10),

10. Utilisation selon l'une des revendications 6 à 9, **caractérisée en ce qu'**un insert (21) s'étend sur la première portion et sépare le premier canal (30) du deuxième canal (31).

11. Utilisation selon l'une des revendications 6 à 10, **caractérisée en ce que** le premier canal (30) et le deuxième canal (31) sont disposés de manière coaxiale par rapport à l'axe de la pointe (1).

12. Utilisation selon l'une des revendications 6 à 11, **caractérisée en ce que** le premier canal (30) et le deuxième canal (31) présentent respectivement des sections transversales de forme annulaire dans la première portion et dans la deuxième portion du canal (32).

13. Utilisation selon l'une des revendications 6 à 12 pour la fabrication de câbles qui présentent au moins trois conducteurs (40), lesquels possèdent respectivement une isolation de pourtour (41).
